# EUROPÄISCHE PATENTANMELDUNG

(11) **EP 2 733 828 A2**
(43) Veröffentlichungstag der Anmeldung: **21.05.2014**
(21) Anmeldenummer: 13192532.3
(22) Anmeldetag: 12.11.2013
(51) Int. Cl.: H02K 7/02

(54) **Schwungrad für einen Elektroantrieb**

(30) Priorität: 15.11.2012 DE 102012111007
(71) Anmelder: Jungbauer, Peter, 85221 Dachau (DE)
(72) Erfinder: Jungbauer, Peter, 85221 Dachau (DE)
(74) Vertreter: Wittmann, Ernst-Ulrich

(57) **Zusammenfassung**

Die vorliegende Erfindung betrifft eine Schwungmasse (1) für einen Elektromotor (4) zum Einbau in einen Verbrennungsmotor, mit einem Massekörper (1c) und einer Kupplung. Die Erfindung ist dadurch gekennzeichnet, dass der rotationsförmige Massekörper (1c) wenigstens Teile des Elektromotors aufnimmt und die Kupplung (11) zur Übertragung eines Drehmoments von der Antriebswelle des Elektromotors (4) auf den Massekörper stirnseitig an dem Massekörper angeordnet und mit der Antriebswelle (4b) des Elektromotors drehfest verbunden ist. Ferner Umfasst die Erfindung auch die Verwendung der Schwungmasse zur Erhöhung des Drehmoments eines Elektromotors und ein Verfahren zum Nachrüsten der Schwungmasse mit einem Elektromotor in das Gehäuse eines Verbrennungsmotors.

## Beschreibung

Die vorliegende Erfindung betrifft ein Schwungrad für einen Elektroantrieb, insbesondere für einen Elektromotor, wie sie beispielsweise für den Einsatz von Elektroantrieben in der Fahrzeugindustrie, bevorzugt bei Zweirädern verwendet werden.

Im Stand der Technik sind Elektroantriebe für Zweiräder bekannt. Es gibt jedoch derzeit nur wenige Hersteller von Elektromotorrädern und momentan nur wenige TRIAL-Motorräder mit großem Scheibenläuferelektromotor, welche jedoch als Direktantrieb ohne Getriebe angeboten werden.

Der Nachteil der auf dem Markt befindlichem Modelle in der Ausführung mit Scheibenläufer, Direktantrieb und ohne Getriebe ist, dass der bauartbedingte große Durchmesser des Elektromotors keinen Bauraum für ein Getriebe lässt. Ohne Getriebe ergeben sich jedoch eine Reihe von Nachteilen: Zum Beispiel entsteht ein hoher Stromverbrauch beim Einsatz von Elektromotoren und die erreichbare Endgeschwindigkeit ist beschränkt. Auch ist der Bedienkomfort erheblich eingeschränkt.

Darüber hinaus existieren auch Prototypen von Elektroantrieben für Motorräder mit Getriebe, wobei hier der Nachteil einer Drehmomentschwäche besteht, insbesondere wenn man aus dem Stand weg ein Hindernis überwinden muss. Hierzu sind relativ hohe Drehmomente von Nöten, die bei dem zur Verfügung stehenden Elektromotor in Kombination mit dem verwendeten Getriebe nicht zufriedenstellend erreicht werden.

Ausgehend von diesem Stand der Technik ist es Aufgabe der vorliegenden Erfindung die im Stand der Technik bekannten Nachteile wenigstens teilweise zu überwinden bzw. einen Elektroantrieb, insbesondere für Zweiräder bzw. Motorräder, bereit zu stellen, bei welchem aufgrund der bauraumbedingten Gegebenheiten vorzugsweise mit einem Verbrennungsmotorgehäuse das durch den Elektromotor zur Verfügung gestellte Drehmoment erhöht wird.

Die Aufgabe der vorliegenden Erfindung wird durch eine Schwungmasse für einen Elektromotor zum Einbau in einen Verbrennungsmotorgehäuse gemäß Anspruch 1 und durch ein Verfahren zur Montage eines Elektromotors mit Schwungmasse in einem Verbrennungsmotorgehäuse gelöst. Bevorzugte Ausgestaltungsformen der vorliegenden Erfindung sind Gegenstand der jeweiligen Unteransprüche.

Die erfindungsgemäße Schwungmasse für einen Elektromotor zum Einbau in ein Verbrennungsmotorgehäuse weist wenigstens einen Massekörper und eine hiermit verbundene Kupplung auf. Darüberhinaus ist der vorzugsweise rotationsförmig ausgestaltete Massekörper wenigstens derart ausgestaltet, dass er Teile des Elektromotors aufnimmt und die Kupplung zur Übertragung eines Drehmoments von der Antriebswelle des Elektromotors vorzugsweise stirnseitig an den Massekörper angeordnet ist und mit der Antriebswelle des Elektromotors drehfest verbunden ist.

Entsprechend der vorliegenden Erfindung wird u.a. als rotationsförmige Masse eine Bauform verstanden, die beispielsweise durch einen Hohlzylinder mit einem Stirndeckel verwirklicht ist, wobei gemäß der vorliegenden Erfindung beispielsweise Teile der Antriebswelle und/oder des Stators bzw. Rotors und/oder des Elektromotors innerhalb des hohlförmig ausgestalteten Massekörpers, d.h. im Lumen des Massekörpers, angeordnet sind. Alternativ kann solch eine rotationsförmige Masse auch kegelförmig oder oval und insbesondere aber hohl ausgeführt sein.

Gemäß einer weiteren, besonders bevorzugten Ausführungsform der vorliegenden Erfindung ist die Kupplung, welche das Drehmoment der Antriebswelle auf den Massekörper überträgt, zwischen dem Gehäuse des Elektromotors und einem Antriebsritzel angeordnet. Dabei dient das Antriebsritzel zur Weiterleitung des Drehmoments des Elektromotors auf Antriebskomponenten wie beispielsweise bei Kraftfahrzeugen zum Getriebe bzw. dem Antriebsstrang inkl. den Rädern.

Gemäß einer weiteren, besonders bevorzugten Ausführungsform ist die Kupplung in derart ausgestaltet, dass diese die Antriebswelle des Elektromotors verlängert und auf dieser Verlängerung das Antriebsritzel zur Weiterleitung des Drehmoments des Elektromotors bereitgestellt wird.

Die vorliegende Erfindung umfasst ferner eine Ausführungsform, bei welcher die Schwungmasse und/oder Teile des Elektromotors vorzugsweise in Kombination in einem Motorengehäuse, vorzugsweise einem Verbrennungsmotorgehäuse, aufgenommen werden. Solche Verbrennungsmotorgehäuse sind vorzugsweise Gehäuse von einzylindrischen Motoren wie Zweitaktern, welche neben dem eigentlichen Motor mit Verbrennungsraum, Kolben, Pleuelstange und Kurbelwelle insbesondere für den Einsatz in Kraftfahrzeugen auch ein Getriebe inkl. gegebenenfalls einer Getriebekupplung aufweisen, die vorzugsweise über ein Antriebsritzel mit dem Motor verbunden ist.

Für den Einbau des Elektromotors werden wie nachfolgend im Detail dargestellt wesentliche, den Verbrennungsmotor bestimmende Bauteile (Kolben, Pleuelstange und Kurbelwelle) entfernt, so dass innerhalb des Motors ein Freiraum entsteht, in welchen der entsprechende Elektromotor und die beanspruchte Schwungmasse eingebracht werden können. Dazu muss gegebenenfalls auch das Motorengehäuse erweitert werden, was beispielsweise durch eine spannende Bearbeitung des Innenraums erfolgt. Ziel ist es, den Elektromotor innerhalb des Verbrennungsmotorgehäuses derart anzuordnen, dass die Antriebsachse des Elektromotors im wesentlichen im Bereich der Kurbelwelle angeordnet ist und durch die entsprechenden Öffnungen des Verbrennungsmotorgehäuses hindurch geführt wird, um vorzugsweise auf der Außenseite ein Antriebsritzel zu betreiben, mit welchem das Drehmoment des Elektromotors auf den Antriebsstrang eines entsprechenden Kraftfahrzeuges übertragen werden kann.

Die vorliegende Erfindung wird vorzugsweise für Verbrennungsmotoren beschrieben, die im Bereich der Kraftfahrzeugtechnik eingesetzt werden. Es liegt jedoch auch im Sinne der vorliegenden Erfindung, dass entsprechende Abwandlungen von Elektromotoren, insbesondere mit der Schwungmasse auch für andere Bereiche in Kombination mit einem entsprechenden Motorengehäuse verwendet werden können. Entsprechend der vorliegenden Erfindung wird mit der erfindungsgemäßen Lösung für einen Elektromotor eine Schwungmasse bereitgestellt, die in besonderen Belastungssituationen ein zusätzliches Drehmoment bereitstellt. Dies erfolgt gemäß der vorliegenden Erfindung durch die Anordnung einer entsprechenden Schwungmasse, wobei die Schwungmasse - insbesondere die radial außenliegenden Massenbereiche - einen Massenkörper bilden, der vorzugsweise aus einem Material hergestellt wird, welches aus einer Gruppe ausgewählt wird, welche Stähle wie beispielsweise C60 Stahl, 41 CR4 Stahl, X10Cr13 Stahl, 36% Ni-Stahl, EC 801.7131 16 MnCr5, Tantal, Wismut, Aluminium, Wolfram, Blei, hochdichte Stähle und Metalle, bevorzugt härtbare Materialien und Stählen, Kombinationen hiervon und dergleichen aufweist.

Darüberhinaus werden insbesondere für den Massekörper und/oder Teile der Schwungmasse Materialien verwendet, welche eine Dichte aufweisen, die vorzugsweise zwischen 7,2 kg/dm³, und 20 kg/dm³, bevorzugt zwischen 7,8 kg/dm³ und 19,3 kg/dm³ liegt. Darüberhinaus weisen besonders bevorzugte Materialien eine Kernfestigkeit zwischen 800 N/mm² und 1100 N/mm² auf.

Gemäß einer weiteren, besonders bevorzugten Ausführungsform der vorliegenden Erfindung ist die Schwungmasse, welche mittels der Kupplung mit der Antriebswelle des Elektromotors verbunden ist, außerhalb des Elektromotorengehäuses angeordnet. Es liegt aber auch im Sinne der vorliegenden Erfindung, dass der Elektromotor selbst ohne ein explizites Gehäuse verwendet wird und partiell innerhalb der Schwungmasse angeordnet wird. Vorteilhaft ist die Verwendung eines Elektromotors mit Gehäuse, da hiermit auch auf Elektromotoren - wie sie im Stand der Technik bekannt sind - zurückgegriffen werden kann.

Gemäß einer weiteren, besonders bevorzugten Ausführungsform ist die Schwungmasse hohlzylindrisch ausgebildet, wobei die Schwungmasse in einer weiteren, besonders bevorzugten Ausführungsform einen Stirndeckel aufweist, welcher die Schwungmasse und die Kupplung verbindet. Ferner kann gemäß einer weiteren, besonders bevorzugten Ausführungsform der Stirndeckel Durchbrechungen aufweisen, um insbesondere eine Belüftung des Elektromotors zu gewährleisten. Dies kann zum Beispiel die Belüftung von Bauteilkomponenten des Elektromotors betreffen, die innerhalb des Lumens des Hohlzylinders oder außerhalb von diesem angeordnet sind.

Gemäß einer weiteren, besonders bevorzugten Ausführungsform sind die Kupplung, der Massekörper und der Stirndeckel einstückig ausgebildet. Es liegt jedoch auch im Sinne der vorliegenden Erfindung, dass die Schwungmasse aus mehreren Bauteilen zusammengesetzt wird. Insbesondere liegt es im Sinne der vorliegenden Erfindung, dass für die einzelnen Bauteile wie Kupplung, Massekörper und Stirndeckel jeweils entsprechend geeignetes Material eingesetzt wird, was den jeweiligen technischen Bedingungen und anwendungsspezifischen Notwendigkeiten Rechnung trägt. So ist es Aufgabe der Kupplung, eine dauerhafte, drehschlüssige Verbindung zwischen dem Massekörper und der Antriebswelle des Elektromotors bereitzustellen, wohingegen der Massekörper im wesentlichen durch das bei vorgegebenen Volumen bereitgestellte Masse gekennzeichnet wird. Diese muss, um insbesondere ein möglichst hohes Drehmoment bereit zu stellen, welches durch die Schwungmasse auf die Antriebswelle des Elektromotors übertragen werden kann, möglichst hoch sein, so dass insbesondere in diesem Bereich wenigstens teilweise Materialien mit besonders hohen Dichten wie beispielsweise hochdichten Stählen, Wismut, Wolfram, Tantal, Blei oder entsprechende Materialien verwendet werden können.

Es liegt auch im Sinne der vorliegenden Erfindung, dass die Schwungmasse mit dem Massekörper, der Kupplung und dem Stirndeckel derart ausgestaltet ist, dass insbesondere der Massenkörper Öffnungen und Ausnehmungen aufweist, in welche entsprechend dichte Materialien - wie die zuvor genannten - eingebracht werden können.

Gemäß einer weiteren, besonders bevorzugten Ausführungsform weist die Schwungmasse spezifische geometrische Strukturen auf, wobei insbesondere der Innenradius des Massekörpers zwischen 85 mm und 150 mm, bevorzugt zwischen 90 mm und 100 mm und insbesondere bei ca. 200 mm liegt. Darüberhinaus liegt der Außenradius des Massekörpers vorzugsweise zwischen 100 mm und 200 mm, bevorzugt zwischen 100 mm und 150 mm und insbesondere bei ca. 116 mm. Die Länge des Massekörpers ist gemäß einer weiteren, besonders bevorzugten Ausführungsform zwischen 40 mm und 70 mm, insbesondere zwischen 50 mm und 60 mm und insbesondere 56 mm. Darüberhinaus weist die Masse des Massekörpers oder der Schwungmasse eine Masse auf, welche zwischen 0,1 kg und 5 kg, bevorzugt zwischen 1 kg und 4 kg und insbesondere bei etwa 2 kg liegt.

Die Aufgabe der Erfindung wird auch durch ein Verfahren zur Montage eines Elektromotors mit einer Schwungmasse - wie sie zuvor beansprucht wurde - in einem Verbrennungsmotorgehäuse gelöst. Hierbei umfasst das Verfahren wenigstens das Öffnen eines Seitenbereichs des Verbrennungsmotorgehäuses, das Entfernen wenigstens des Kolbens, der Pleuelstange und/oder der Kurbelwelle und eine Erweiterung bzw. Anpassung des Verbrennungsmotorgehäuses zur Aufnahme der Schwungmasse und des Elektromotors. Gemäß dem erfindungsgemäßen Verfahren wird das Verbrennungsmotorgehäuse mit dem Elektromotor bzw. dem Gehäuse des Elektromotors durch einen Adapter verbunden, der vor dem Einbringen und Befestigen des Elektromotors mit der Schwungmasse an dem Verbrennungsmotorgehäuse angeordnet wird.

Gemäß einer weiteren, besonders bevorzugten Ausführungsform des erfindungsgemäßen Verfahrens werden der Elektromotor und die Schwungmasse vor dem Einbringen in das Verbrennungsmotorgehäuse miteinander verbunden und die Antriebswelle bzw. die Verlängerung der Antriebswelle des Elektromotors wird in der Öffnung der Kurbelwelle des Verbrennungsmotorgehäuses in derart gelagert, dass das durch den Elektromotor bereitgestellte Drehmoment - vergleichbar zur Funktion des Verbrennungsmotors - abgegeben werden kann. Hierzu ist gemäß einer weiteren, besonders bevorzugten Ausführungsform an der Antriebswelle bzw. an der Verlängerung der Antriebswelle ein Antriebsritzel angeordnet.

Die vorgenannte Schwungmasse dient gemäß der vorliegenden Erfindung insbesondere für den Einbau eines Elektromotors in einem Verbrennungsmotorgehäuse, wobei hierzu insbesondere Verbrennungsmotorgehäuse eines Motors, wie beispielsweise eines Motorradmotors, verwendet werden. Besonders vorteilhaft ist hier, dass durch die Kombination der Schwungmasse mit einem Elektromotor diese Schwungmasse als Energiespeicher und/oder zur Dämpfung und/oder Stabilisierung des Drehmoments des Elektromotors einerseits, gegebenenfalls aber auch eine Stabilisierung des Zweirads durch die entsprechend hohe Umfangsgeschwindigkeit inklusive der damit verbundenen Schwungmasse bereitgestellt werden kann.

Darüberhinaus liegt es im Sinne der vorliegenden Erfindung, dass die Schwungmasse und/oder der Elektroantrieb als Umbausatz bereitgestellt werden, um insbesondere ein existierendes Verbrennungsmotorgehäuse bzw. einen Verbrennungsmotor derart umzurüsten, dass dieser einerseits den Bauraum für den Elektromotor inklusive der Schwungmasse bereitstellt und andererseits durch die Anordnung des Elektromotors im Verbrennungsmotorgehäuse die bei einem Verbrennungsmotor üblicherweise mit bereitgestellten Getriebekomponenten durch den Elektroantrieb mit bzw. weiter verwendet werden können. Neben dem Elektromotor und der Schwungmasse kann gemäß einer weiteren, besonders bevorzugten Ausführungsform eines entsprechenden Umbausatzes, dieser auch einen Adapterflansch umfassen mit welchem insbesondere der Elektromotor mit dem Verbrennungsmotorgehäuse in einfacher Art verbunden werden kann.

Mit diesem Aufbau löst die Erfindung die Nachteile des Standes der Technik mit einem von einem Elektromotor angetriebenen Schwungrad, welches zwischen Getriebe und Elektromotor angeordnet ist und welches durch eine Kupplung nach erreichen einer Drehzahl seine Rotationsenergie abgeben kann, womit ein zusätzliches Drehmoment über das Getriebe am Hinterrad des Fahrzeugs bereitgestellt werden kann.

Die Schwungmasse und der Elektromotor sind vorzugsweise in einem Gehäuse verbaut, welches auch die Kupplung und das Getriebe aufnimmt. Es ist auch möglich das Getriebe und die Kupplung in einem separaten Gehäuse, von Elektromotor und Schwungmasse getrennt anzuordnen, um den Durchmesser der Schwungmasse und damit die Rotationsenergie zu erhöhen

Die Schwungmasse kann einteilig aber auch mehrteilig ausgeführt sein. So könnte beispielsweise die Schnittstelle einerseits zum Elektromotor und Getriebe in Stahl ausgeführt sein, um das Moment gesichert übertragen zu können, und andererseits die rotierende Masse auf einem größtmöglichen Durchmesser in einem anderem Material mit hoher Dichte ausgeführt werden.

Nachfolgend wird Erfindung anhand eines Ausführungsbeispiels beschrieben, wobei darauf hingewiesen wird, dass durch dieses Ausführungsbeispiel die vorliegende Erfindung nicht beschränkt wird. Es liegt ferner im Sinne der vorliegenden Erfindung, dass Abwandlungen sowohl im Bezug auf die Ausformung der Schwungmasse, als auch deren Anordnung im Sinne der vorliegenden Erfindung liegen.

Dabei zeigt:
Figur 1 eine Explosionszeichnung der Anordnung der erfindungsgemäßen Schwungmasse in einem Verbrennungsmotorgehäuse inklusive der Anordnung des Elektromotors über einen Adapterflansch und
Figur 2 die Schnittdarstellung der entsprechenden Anordnung aus Figur 1.

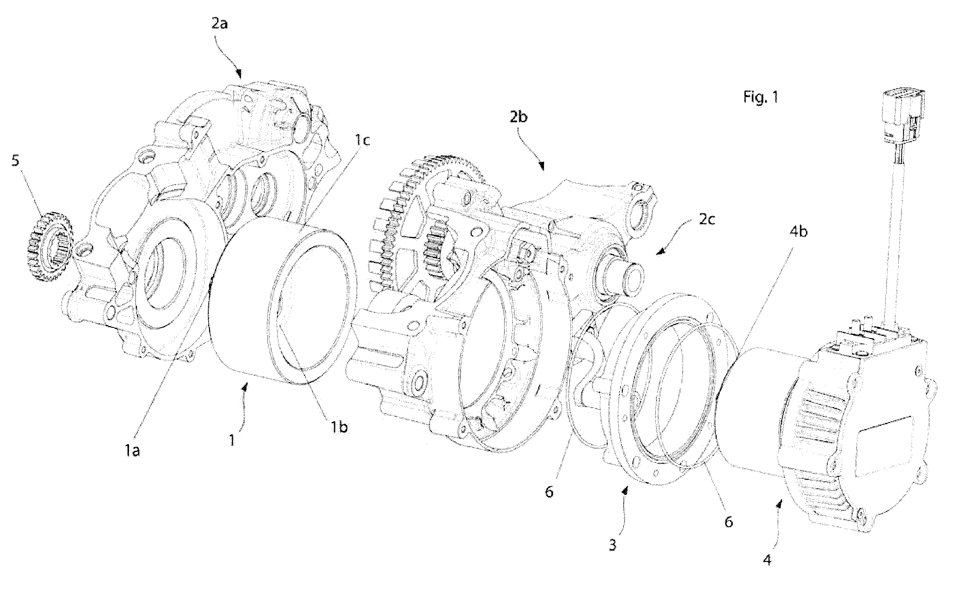

Figur 1 zeigt eine Explosionsdarstellung eines Motorengehäuses, in welchem die erfindungsgemäße Schwungmasse 1 in einem Verbrennungsmotorgehäuse mit den beiden Gehäuseschalen 2a und 2b und den hierbei verwendeten weiteren Komponenten wie einem Adapterflansch 3, dem Elektromotor 4, dem Antriebsritzel 5 und Dichtungsringe 6 angeordnet ist. Entsprechend der hier dargestellten bevorzugten Ausführungsform ist das Verbrennungsmotorengehäuse 2a, 2b derart vorbereitet, dass neben der Entfernung des Kolbens, der Pleuelstange bzw. der Kurbelwelle durch entsprechende Ausfräsungen ein Platz geschaffen wurde, in welchem beispielsweise der Elektromotor 4 mit seiner Antriebsachse 4b und dem Steuergerät über einen Flansch 3 und die Verwendung von Dichtungsringen 6 seitlich angeordnet wird. Zwischen den beiden Verbrennungsmotorengehäusebauteilen 2a und 2b ist die Schwungmasse 1 angeordnet, durch welche sich mittig die Antriebswelle 4b des Elektromotors 4 und Teile des Gehäuses des Elektromotors im zusammengebauten Zustand wenigstens teilweise hinein erstreckt. Über die Kupplung 11 der Schwungmasse 1 ist die Schwungmasse 1 im zusammengebautem Zustand mit dem Elektromotor 4 drehfest verbunden. Von der Schwungmasse 1 ist im wesentlichen der Massekörper 1 c zu erkennen, der über den Stirndeckel 1b mit der Kupplung 11 verbunden ist. Die Achse 4b des Elektromotors 4 erstreckt sich in zusammengebautem Zustand durch das Verbrennungsmotorgehäuse 2a, 2b hindurch und wird durch die Kupplung 11 der Schwungmasse 1 derart verlängert, dass auf der Verlängerung 1 c das Antriebsritzel 5 zur Bereitstellung des Elektromotors 4 des Drehmoments angeordnet ist. Über dieses Antriebsritzel 5 wird der Elektromotor 4 mit dem Getriebe 2c des Verbrennungsmotorgehäuses verbunden, so dass gemäß der hier dargestellten Ausführungsform eine Umbauvariante für einen Verbrennungsmotor bereitgestellt wird, bei welchem an der Position von Kolben, Pleuelstangen und Kurbelwelle im Gehäuse ein Elektromotor 4, inklusive einer Schwungmasse 1 zur Erhöhung des Drehmomentes bereitgestellt wird, dass über ein entsprechend im Verbrennungsmotorgehäuse 2a, 2b angebrachtes Getriebe 2c zum Betrieb eines Kraftfahrzeuges einsetzbar ist.

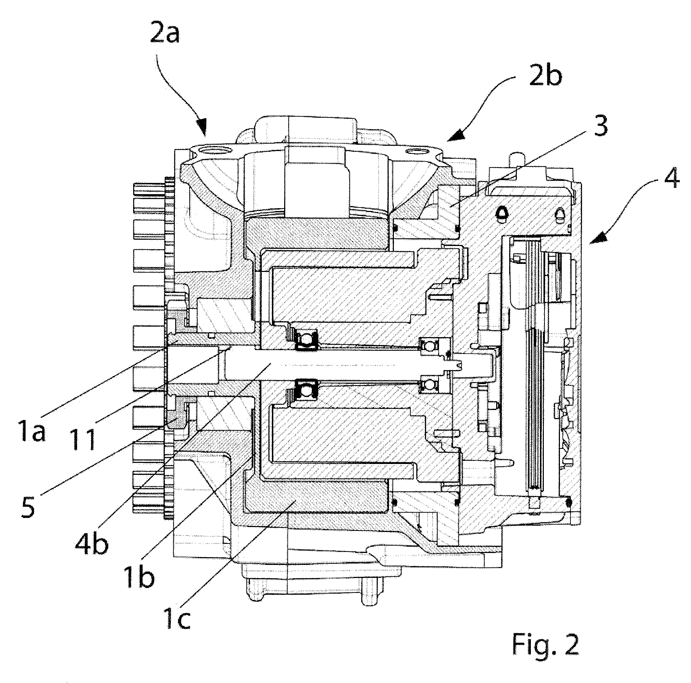

Figur 2 ist eine Schnittdarstellung des zusammengebauten Antriebssystems, in welcher die Schwungmasse 1 mit dem Stirndeckel und der Kupplung 11 mit der Achse 7 des Elektromotors 4 verbunden ist, wobei der Elektromotor 4 über den Adapterflansch 3 mit dem Verbrennungsmotorgehäuse 2b verbunden ist. Auf der gegenüberliegenden Seite des Verbrennungsmotorgehäuses 2b ist das Verbrennungsmotorgehäuse 2a angeordnet, auf dessen Außenseite das Antriebsritzel 5 angeordnet ist, welches über die Verlängerung 1 c der Kupplung 11 mit der Antriebswelle 4b des Elektromotors 4 verbunden ist.

## Patentansprüche

1. Schwungmasse (1) für einen Elektromotor (4) zum Einbau in einen Verbrennungsmotor, mit einem Massekörper (1 c) und einer Kupplung, **dadurch gekennzeichnet, dass**
der rotationsförmige Massekörper (1c) wenigstens Teile des Elektromotor (4) aufnimmt, und die Kupplung (11) zur Übertragung eines Drehmoments von der Antriebswelle des Elektromotors (4) auf den Massekörper (1 c) stirnseitig an dem Massekörper angeordnet und mit der Antriebswelle (4b) des Elektromotors (4) drehfest verbunden ist.

2. Schwungmasse (1) für einen Elektromotor (4) gemäß Anspruch 1, **dadurch gekennzeichnet, dass**
die Kupplung (11) zwischen dem Gehäuse des Elektromotors (2a) und einem Antriebsritzel (5) angeordnet ist.

3. Schwungmasse (1) für einen Elektromotor (4) gemäß Anspruch 1 oder 2, **dadurch gekennzeichnet, dass**
die Kupplung (11) eine Verlängerung (1a) der Antriebswelle (4b) bereit stellt, auf welcher vorzugsweise das Antriebsritzel (5) angeordnet ist.

4. Schwungmasse (1) für einen Elektromotor (4) gemäß einem der Ansprüche 1 bis 3, **dadurch gekennzeichnet, dass**
die Schwungmasse (1) und/oder Teile des Elektromotors (4) in einem Motorengehäuse, insbesondere von einem Verbrennungsmotor (2a, 2b) wie beispielsweise für ein Kraftfahrzeug aufnehmbar sind.

5. Schwungmasse (1) für einen Elektromotor (4) gemäß einem der vorstehenden Ansprüche, **dadurch gekennzeichnet, dass**
die Schwungmasse (1) hohlzylindrisch ausgebildet ist.

6. Schwungmasse (1) für einen Elektromotor (4) gemäß einem der vorstehenden Ansprüche, **dadurch gekennzeichnet, dass**
die Schwungmasse (1) einen Stirndeckel (1 b) aufweist, welcher die Schwungmasse (1) und die Kupplung (11) drehschlüssig verbindet.

7. Schwungmasse (1) für einen Elektromotor (4) gemäß einem der vorstehenden Ansprüche, **dadurch gekennzeichnet, dass**
der Stirndeckel (1 b) Durchbrechungen aufweist.

8. Schwungmasse (1) für einen Elektromotor (4) gemäß einem der vorstehenden Ansprüche, **dadurch gekennzeichnet, dass**
die Kupplung (11), der Massekörper (1 c) und der Stirndeckel (1 b) einstückig ausgebildet sind.

9. Schwungmasse (1) für einen Elektromotor (4) gemäß einem der vorstehenden Ansprüche, **dadurch gekennzeichnet, dass**
der Innenradius der Massekörper (1c) zwischen 85 mm und 150 mm, bevorzugt zwischen 90 mm und 100 mm und insbesondere bei ca. 92 mm liegt und/oder der Außenradius der Massekörper (1c) zwischen 100 mm und 200 mm, bevorzugt zwischen 100 mm und 150 mm und insbesondere bei ca. 116 mm liegt und/oder die Länge der Massekörper (1 c) zwischen 40 mm und 70 mm, bevorzugt zwischen 50 mm und 60 mm und insbesondere bei ca. 56 mm liegt und/oder die Masse des der Massekörpers (1 c) und/oder des Schwungmasse (1) zwischen 0,1 kg und 5 kg, bevorzugt zwischen 1 kg und 4 kg und insbesondere bei etwa 2 kg liegt.

10. Schwungmasse (1) für einen Elektromotor (4) gemäß einem der vorstehenden Ansprüche, **dadurch gekennzeichnet, dass**
die Schwungmasse (1) bzw. der Massekörper (1 c) aus einem Material hergestellt ist, welches aus einer Gruppe ausgewählt wird, welche Stahl wie beispielsweise C60 Stahl, 41 CR4 Stahl, X10Cr13 Stahl, 36% Ni-Stahl, EC 801.7131 16 MNCr5, Tantal, Wismut, Aluminium, Wolfram, Blei, hochdichte Stähle und Metalle, bevorzugt härtbare Materialien, Kombinationen hiervon und dergleichen aufweist und/oder Teile der Schwungmasse (1) wenigstens teilweise aus einem Material gebildet ist, welches eine Dichte zwischen 7,2 kg/dm³ und 20 kg/dm³, bevorzugt zwischen 7,8 kg/dm³ und 19,3 kg/dm³ aufweist.

11. Schwungmasse (1) für einen Elektromotor (4) gemäß einem der vorstehenden Ansprüche, **dadurch gekennzeichnet, dass**
die Schwungmasse (1) außerhalb des Elektromotorgehäuses angeordnet ist.

12. Verfahren zur Montage eines Elektromotors (4) mit einer Schwungmasse (1) gemäß einem der Ansprüche 1 bis 11 in ein Verbrennungsmotorgehäuse (2a, 2b) mit den Schritten:
- Öffnen wenigstens eines Seitenbereichs des Verbrennungsmotorgehäuses (2a, 2b) ;
- Entfernen wenigstens des Kolbens, der Pleuelstange und der Kurbelwelle;
- Erweiterung und Anpassung des Verbrennungsmotorgehäuses (2a, 2b) zur Aufnahme der Schwungmasse (1) und/oder des Elektromotors (4);
- Anbringung eines Adapters am Verbrennungsmotorgehäuse (2a, 2b) zur Befestigung des Elektromotors (4);
- Einbringen und Befestigen des Elektromotors (4) mit der Schwungmasse (1).

13. Verfahren nach Anspruch 12, **dadurch gekennzeichnet, dass** der Elektromotor (4) und die Schwungmasse (1) vor dem Einbringen in das Verbrennungsmotorgehäuse miteinander verbunden werden.

14. Verfahren nach Anspruch 12 oder 13, **dadurch gekennzeichnet, dass**
die Antriebswelle (4b) des Elektromotors (4) oder die Verlängerung (1a) der Antriebswelle (4b) in der Öffnung der Kurbelwelle des Verbrennungsmotorgehäuses (2a) gelagert sind.

15. Verfahren nach einem der Ansprüche 12 bis 14, **dadurch gekennzeichnet, dass**
auf der Antriebswelle (4b) des Elektromotors (4) oder die Verlängerung (1a) der Antriebswelle (4) ein Antriebsritzel (5) angeordnet wird.

16. Verwendung einer Schwungmasse (1) gemäß einem der Ansprüche 1 bis 11 mit einem Elektromotor (4) für den Einbau in ein Verbrennungsmotorgehäuses (2a, 2b), insbesondere in ein Verbrennungsmotorgehäuse eines Motorrads wie beispielsweise ein TRIAL-Motorrad, vorzugsweise als Energiespeicher und/oder zur Dämpfung und/oder zur Stabilisierung des Drehmoments des Elektromotors.

17. Umbausatz für einen Verbrennungsmotor zu einem Elektroantrieb umfassend wenigstens eine Schwungmasse (1) gemäß einem der Ansprüche 1 bis 11 und einen Elektromotor (4).

18. Umbausatz gemäß Anspruch 17 ferner umfassend einen Adapterflansch (3) zur Anordnung des Elektromotors (4) und/oder der Schwungmasse (1) in einem Verbrennungsmotorgehäuse (2a, 2b).
